# EUROPÄISCHE PATENTANMELDUNG

(11) **EP 1 439 092 A2**
(43) Veröffentlichungstag der Anmeldung: **21.07.2004**
(21) Anmeldenummer: 03018923.7
(22) Anmeldetag: 20.08.2003
(51) Int. Cl.: B60P 7/135

(54) **Einspannvorrichtung zur Sicherung von Ladegut**

(30) Priorität: 20.08.2002 DE 10238962
(71) Anmelder: Richter, Alexander, 86508 Rehling (DE)
(72) Erfinder: Richter, Alexander, 86508 Rehling (DE)
(74) Vertreter: Petra, Elke, Dipl.-Ing.

(57) **Zusammenfassung**

Es wird eine Einspannvorrichtung zur Sicherung von Ladegut auf der Ladefläche eines Fahrzeuges beschrieben, mit einer Sperrstange (1), gebildet aus mindestens zwei koaxialen, axial auseinander schiebbaren Stangenteilen, einer Trieb- und Spanneinrichtung (2) zwischen diesen, je einem Stützglied (3, 4) mit rutschhemmender Auflage an den Stangenenden, wobei die äußere Stützfläche des oberen, kippbeweglichen Stützgliedes den Sperrstangendurchmesser radial wesentlich überragt. Wesentlich dabei ist, dass auch das untere Stützglied (4) eine den Stangendurchmesser wesentlich überragende äußere Stützfläche (24) besitzt und zudem ein loses Steckteil ist, an dessen innerer Stirnfläche mindestens eine Sackloch-Steckbohrung (26, 27) vorgesehen ist, zur wahlweisen abstützenden Aufnahme des unteren Endes mindestens einer Sperrstange, wodurch eine äußerst sichere, auch schräge Abstützung erfolgen kann.

## Beschreibung

Die Erfindung betrifft eine Einspannvorrichtung zur Sicherung von Ladegut gemäß Oberbegriff des Anspruchs 1, wie sie für Laderäume von Fahrzeugen aller Art Verwendung findet.

Abenteuerliche Beladung von Fahrzeugen und Einrichtung von Fahrzeugen durch mangelnde Sicherung sind Ursache für in zunehmendem Maße auftretende schwere Unfälle mit erheblichen Sach- und Personenschäden. Die große Mehrheit von Fahrzeugen fährt mit ungesicherter Ladung. Dies betrifft Schwerlastfahrzeuge, Montagewie Transport- und Personenkraftwagen.

So werden z. B. in Montagefahrzeugen die Möbel oder Behältnisse am Fahrzeugboden fest angeschraubt. Die durch Boden und Holme hindurch reichenden Befestigungsschrauben reißen jedoch bereits bei einem Aufprall von ca. 30 km pro Stunde aus. Abgesehen davon, dass dabei der Fahrzeugboden beschädigt wird, können die aus der Verankerung gerissenen Möbel schwere Sach- und Personenschäden verursachen.

Weiter ist bekannt, die Laderäume von Fahrzeugen mit Hilfe von fest montierten Sicherungssystemen abzusichern wie z.B. mittels Ösen und Gurten, festen Haltebalken oder mit einem fest montierten Spannstangensystem.

So sind z. B. aus den DE 201 10 030 U1, DE 198 09 747 A1, DE 71 26 630 U1 und DE 43 35 478 C1 Sperrstangen-Sicherungen bekannt, die an ihren teleskopisch längeneinstellbaren Stangen endseitig jeweils Vorkehrungen aufweisen wie z. B. Bolzen oder Profilflächen, die formschlüssig in Lochschienen oder entsprechend profilierte Flächen wie z. B. in Boden, Wänden oder Decke der Laderäume eingreifen. Abgesehen davon, dass hierdurch die Sperrstangen nur an vorbestimmten Stellen befestigbar sind, sind die entsprechenden Maßnahmen im Fahrzeug, wie Profilschienen oder profilierter Boden, sowohl aufwändig in der Herstellung als auch störend beim Bewegen des Fahrgutes auf diesen Flächen und beim Reinigen dieser Flächen.

Es sind auch Sperrstangen zur Sicherung von Ladegut bekannt, die ohne Formschluss, lediglich durch Verspannen zwischen den jeweils zwei gegenüberliegenden Flächen angeordnet werden. Sie bestehen meist aus zwei teleskopisch ineinander geführten Rohren, die auseinander schiebbar sind, bis die beiden Stangenenden an den gegenüberliegenden Wänden des Packraums zur Abstützung kommen, und besitzen eine Trieb- und Sperreinrichtung zwischen den beiden Rohren. An den beiden Stangenenden sind Stützglieder vorgesehen, die an ihren äußeren Stützflächen meist mit einer rutschhemmenden Beschichtung versehen sind. Diese bekannten Absperrstangen sind aber nicht ausreichend vielseitig und sicher einsetzbar.

So zeigten die DE 39 01 412 C2 jeweils eine Sperrstange, an deren Enden als Stützglieder übereinstimmende, fest aufgesetzte Endkappen vorgesehen sind, die an ihren äußeren Stirnflächen mit einer relativ dünnen, eingelegten Gummiplatte oder einem hochelastischen, aufgesetzten Schaumstoffplättchen versehen sind. Abgesehen davon, dass durch die relativ niedrigen Gummi- oder Schaumstoffplatten eine nur sehr geringe Profilanpassbarkeit vorhanden ist, ist deren Durchmesser nicht wesentlich größer oder geringer als derjenige der Stangenrohre, so dass nur eine geringe Rutschhemmung vorhanden ist.

In der DE 202 02 485 U1 wird neben anderen formeingreifenden Sicherheitsvorrichtungen auch eine Sperrstange beschrieben, die vom Prinzip her ähnlich aufgebaut ist wie die vorbeschriebene, nur dass bei dieser als Stützglieder etwas größere Platten verwendet werden. Eine eventuelle Profilanpassbarkeit oder Möglichkeit der Schrägverspannung dieser bekannten Spannvorrichtung ist nicht entnehmbar, bzw. nicht sinnvoll durchführbar.

Aus der GB 2 191 800 A ist eine Sperrstange bekannt, bei er endseitig sich konisch nach außen erweiternde Stützpfropfen fest eingesteckt sind. Eine sichere, vielseitige, insbesondere winklige Verspannung der Stange ist nicht möglich.

Auch ist aus der DE 100 65 733 C2 eine Frachtpositioniereinrichtung bekannt, an deren Sperrstange endseitig je eine um eine Achse schwenkbare Platte vorgesehen sind. Da beide Enden somit schwenkbeweglich sind, ist eine Schrägverspannung nicht oder nicht ausreichend sicher möglich.

Schließlich ist aus der DE 92 00 083 U1 eine axial spannbare Sperrstange bekannt, deren bodenseitiges Stützglied ebenfalls als starre Endkappe mit eingelassener Gummiplatte und relativ geringem Durchmesser ausgebildet ist. Das obere Stützglied ist dafür relativ großflächig ausgelegt und allseitig kippbeweglich. Dabei stützt sich der Kippteller über einen unteren Flanschrand axial auf dem Gummibelag der oberen Rohr-Endkappe ab. Abgesehen davon, dass das obere Stützglied einen relativ komplexen, störanfälligen Aufbau aufweist, besitzt es ebenfalls nur eine relativ dünne Gummiplatte an seiner Oberseite, so dass eine Konturanpassbarkeit nicht ausreichend vorhanden ist. Auch kann ein Schrägeinspannen dieser Sperrstange trotz Verschwenkbarkeit des oberen Stützgliedes nicht erfolgen, da insbesondere das untere Stützglied nicht verschwenkbar ist bzw. eine entsprechend geneigte Stellung nicht einnehmen kann und zudem auch nicht ausreichend rutschhemmend ausgelegt ist.

Abgesehen davon, dass alle diese bekannten Sperrstangen nicht ausreichend flexibel, rutschfest und profilumgreifend sind, sind sie zudem nicht geeignet, auch zum Fixieren/Festlegen von z. B. Möbeln, Regalen und kistenförmigem Transportgut zu dienen, insbesondere auch nicht bei sehr geringen Platzverhältnissen.

Aufgabe der Erfindung ist somit, eine Einspannvorrichtung oben genannter Gattung anzugeben, die auch bei schräger Fixierung einer Sperrstange, auch an schwer zugänglichen und relativ engen Stellen, das Ladegut zuverlässig sichert.

Diese Aufgabe wird durch eine Einspannvorrichtung oben genannter Gattung mit den kennzeichnenden Merkmalen des Anspruchs 1 gelöst. Vorteilhafte Ausgestaltungen sind in den Unteransprüchen gekennzeichnet.

Dem gemäß besitzen beide Stützglieder eine den Stangendurchmesser radial wesentlich überragende äußere Stützfläche, vorzugsweise von mindestens dem dreifachen Betrag des Durchmessers. Zudem ist das zweite, vorzugsweise untere Stützglied ein loses Steckteil, an dessen inneren bzw. oberen Stirnfläche mindestens eine Sackloch-Steckbohrung vorgesehen ist, die zur wahlweisen abstützenden Steck-Aufnahme des unteren Endes mindestens einer Stange dient. Hierdurch wird der große Vorteil erreicht, dass durch die besonders großflächige Auslegung beider Stützflächen eine besonders sichere Abstützung stattfindet, auch wenn die Abstützkräfte winklig eingeleitet werden. Auch wird durch die Steckverbindung zwischen Stange und unterer Stützplatte eine hohe Flexibilität dahingehend erzeugt, dass die z. B. rechteckige Platte in beliebiger Winkelausrichtung am Boden anordenbar ist. Bei Vorhandensein mehrerer Steckbohrungen ist auch eine unterschiedliche Platzierung der Stange in Längs- oder Querrichtung der Platte möglich.

Von besonderem Vorteil ist, wenn das obere Stützglied mindestens den dreifachen und das untere Stützglied mindestens den vierfachen Durchmesser bzw. Längsund/oder Breitenerstreckung aufweist als der Durchmesser der Spannstange, wodurch an beiden Stangenenden optimal große Abstützflächen vorhanden sind. Dadurch, dass durch die untere Steckverbindung dann auch noch die Möglichkeit besteht, eine untere Stützplatte bedarfsweise größerer oder kleinerer Abmessungen zu verwenden, ist eine optimale Anpassbarkeit an die diversen Gegebenheiten vorhanden.

In Weiterbildung des Erfindungsgedankens ist am unteren Stützglied bzw. an dessen Platte steckseitig mindestens eine senkrechte und/oder mindestens eine schräge Bohrung vorgesehen, so dass die Stange in die untere Stützplatte senkrecht oder winklig eingesteckt werden kann. Sind dann noch mindestens zwei der winkligen Steckbohrungen symmetrisch oder asymmetrisch auseinanderstrebend eingebracht, besteht hier die Besonderheit, dass in der Platte mindestens zwei Sperrstangen in großräumiger V-förmiger oder fächerförmiger Anordnung zueinander einbringbar sind. Es kann also eine Doppel- oder Mehrfach-Abstützung über nur eine untere Abstützplatte erfolgen, wobei dann gleich ein zumindest teilweiser Kräfteausgleich stattfindet. Die winkligen und senkrechten Steckbohrungen können aber auch so zueinander angeordnet oder mit Sperrstangen bestückt sein, dass auch verschränkte Stellungen der Stangen zueinander, z. B. in X-Stellung, oder eine Kombination von V-und X-Stellungen, auch in unterschiedlichen Ebenen und mit oberer Abstützung in unterschiedlichen Ebenen, also in horizontalen und vertikalen Ebenen, erreichbar ist.

Um eine besonders sichere Steckverbindung zwischen Stange und unterer Abstützplatte zu erhalten, sollte in vorteilhafter Weise die Höhe der Steckbohrungen mindestens gleich, besser mindestens 1,5 mal deren Durchmesser sein und es sollten an sich bekannte Drehsicherungen wie Nut-und-Feder vorhanden sein. Hierdurch wird eine kippfeste, verdrehsichere Verbindung zwischen den beiden Teilen im Einbau erreicht. Ist dann noch eine Vielfach-Nut-Feder-Verbindung vorgesehen, z. B. durch Anordnung mehrer, zueinander gleich beabstandeter Axial-Nuten in der Steckbohrung und einer Feder am Stangenende, dann kann die Stange in entsprechend vielen Winkelpositionen in nur eine Plattenbohrung eingesteckt werden.

Weiter ist es von Vorteil, wenn die gesamte äußere Stirnfläche der unteren Stützplatte mit einer relativ dicken flexiblen Materialschicht höchster Gleitreibung versehen ist, wobei sich hierfür Zellkautschuk als äußerst geeignet erwiesen hat, der neben einer ausreichenden Elastizität auch noch äußerst widerstandsfähig ist. Vorzugsweise ist die Auflage aus Zellkautschuk in einer Dicke von mindestens ca. 5 mm, besser ca. 10 mm oder mehr, vorzusehen. Werden kistenförmige Gegenstände wie Möbelstücke oder Kästen mit Hilfe der erfindungsgemäßen Vorrichtung im Fahrzeug befestigt bzw. verspannt, dann sind unter diese mindestens eine Matte oder, unter z. B. die Möbelbeine, Mattenstücke aus Zellkautschuk von der Dicke von ebenfalls mindestens 5 mm, vorzugsweise ca. 10 mm unterzulegen. Hierdurch wird z. B. der Einrichtungsgegenstand verrutschsicher festgehalten, ohne dass die Gefahr besteht, wie bei der bisherigen angeschraubten Befestigung am Fahrzeugboden, dass das Möbelstück aus der Schraubverbindung ausreißt und sich verselbständigt, mit allen bösen Schadensfolgen.

Insbesondere beim Einspannen von kisten- oder kastenförmigem Ladegut, das eine nicht ausreichend starre Oberseite oder Deckelplatte besitzt, ist von großem Vorteil, wenn zwischen unterem Stützglied und Ladegut-Oberseite bzw. der entsprechenden Aufstützfläche, eine lose Bodenadapter-Hilfsplatte rutschfest einlegbar vorgesehen ist. Diese ist entsprechend groß und verwindungs- und biegesteif auszulegen und an Unter- und Oberseite mit rutschhemmenden Ausbildungen zu versehen. So ist an der Auflage-Unterseite eine hoch rutschfeste Stützauflage entsprechender Dicke , Elastizität und Festigkeit angeordnet, z. B. aus Zellkautschuk. Zugleich ist an der Oberseite entweder ebenfalls eine rutschhemmende Auflage aus Zellkautschuk oder eine Oberflächenprofilierung in Form von z. B. Noppen, Riffelungen, Gitter oder einsteckbare Anschläge. Diese Anschläge können in Form von Anschlagleisten oder Anschlagbolzen o. ä. vorgesehen sein, die in Stecklöchern in der Oberseite der Hilfsplatten ein- und umsteckbar sind. Die Hilfsplatte kann dabei min. doppelt so große Längen- und Breitenabmessungen aufweisen wie die Steckplatte des unteren Stützgliedes, so z. B. Abmessungen von ca. min. 20 cm bis min. 50 cm und mehr besitzen und zum gleichzeitigen sicheren Einspannen auch z. B. mehrerer kleinerer Kisten über nur ein nicht besonderes groß ausgelegtes unteres Stützglied dienen. Die Hilfsplatte ist dann so auszulegen bzw. auszuwählen, dass sie rutschsicher auf den mehreren Kisten, diese entsprechend überdeckend, aufliegt, ohne sie einzudrücken. Dabei kann auch ein unteres Stützglied mit relativ geringen Abmessungen eingesetzt werden, wenn es nur durch die entsprechenden Antirutschvorkehrungen an Stützglied und Hilfsplattenoberfläche auf der Hilfsplatte ausreichend festgehalten wird.

Von ganz besonderem Vorteil ist, wenn das obere Stützglied als rutschhemmende Gummiauflage ebenfalls eine dicke, flexible Schicht höchster Gleitreibung und Formanpassbarkeit besitzt, z. B. aus Zellkautschuk. Dabei sollte diese Schicht mit mindestens 5 mm, besser 10 bis 40 mm Höhe mindestens doppelt so dick sein wie die entsprechende Schicht am unteren Stützglied. Das verwendete flexible Antirutsch-Material ist ausreichend stark zur Aufnahme und Einbetten der Gegenkontur z.B. eines Dachholmes, unter Anpressung. Unter Spreizdruck wird somit ein Dachholm durch die "Abpolsterung" der oberen Stützplatte sozusagen formschlüssig umgriffen, so dass eine optimale Abstützung stattfindet. Ist dann zudem die Oberseite der Stützschicht zumindest leicht konkav ausgebildet, dann wird die formschlüssige Abstützbarkeit noch verbessert.

Eine besonders einfache und doch sehr wirksame Ausbildung des oberen Stützgliedes wird erreicht, wenn zur allseitigen Kippbeweglichkeit eine Kugelkopflagerung vorgesehen ist. Dabei ist am oberen Stangenende der Kugelkopf und an der Unterseite der Tragplatte des Stützgliedes die Kugelkopfpfanne vorgesehen, wobei eine zweigeteilte Lagergegenscheibe, welche die beiden Lagerteile zusammenhält, an der Tragplatte z.B. durch Schrauben befestigt ist. Abgesehen davon, dass die Kugelkopflagerung konstruktiv äußerst einfach ist, gibt diese zudem den Vorteil einer optimalen, flächigen Abstützung, in jeder möglichen Winkelstellung der Platte zur Stange. Wird dann schließlich noch der Kugelkopf mit einem Steckzapfen versehen, der mit dem oberen Stangenende in Steckverbindung bringbar ist, dann kann auch das obere Stützglied als loses Steckteil vorhanden sein, was den Zusammenbau der Vorrichtung insgesamt, deren Handhabung, deren Mitführen in nicht verspreiztem Zustand und insbesondere deren Lagerhaltung, wesentlich erleichtert. Selbstverständlich kann die allseitige Kippbarkeit des oberen Stützgliedes auch über jede andere entsprechende Konstruktion realisiert werde.

Als zwischen den axial auseinander schiebbaren Teilen der Sperrstange wirksame Spanneinrichtung bzw. Spreizeinrichtung kann erfindungsgemäß jede bekannte Spanneinrichtung verwendet werden, wie sie auch im vorgenannten Stand der Technik beschrieben sind. So kann neben Exzenter-Spanneinrichtungen, auch in Verbindung mit Zahnstangen o. ä., in vorteilhafter Weise auch eine aus unterschiedlichsten Einsatzfällen bekannte Doppel-Gewindespindel zwischen zwei Rohr- bzw. Hülsenteilen eingesetzt werden, die mit einfachen Mitteln betätigbar ist.

Wie aus obigem zu erkennen ist, weist die erfindungsgemäße Einspannvorrichtung den besonderen Vorteil einer Modulbauweise auf. Sie kann insgesamt aus mehreren Teilen bzw. kleineren Baugruppen einfach zusammengesteckt werden. Es können somit bedarfsweise zusammenstellbare Bausätze zur Verfügung gestellt werden, so dass - je nach Einsatzort und/oder Einsatzbedingungen - unterschiedliche Einspannvorrichtungen bereitgestellt werden können, also mit unterschiedlich großen unteren Abstützplatten, unterschiedlichen Winkelstellungen der Abstützplatte zur Sperrstange und unterschiedlichen Stangenlängen.

So sollte ein Bausatz für eine erfindungsgemäße Einspannvorrichtung mindestens ein Sperrstangenteil mit einer Spreizvorrichtung besitzen, das mindestens ein, vorzugsweise mehrere gegeneinander austauschbare Rohr-Distanzstücke gleicher und/oder unterschiedlicher Länge zur Grob-Längeneinstellung der Sperrstange hat, zudem mindestens ein als Steckmodul ausgebildetes oberes Schwenk-Stützglied und mindestens ein unteres Steckplatten-Stützglied sowie zusätzlich eventuell min. eine Bodenadapter/Stützglied-Hilfsplatte, für den Fall nachgiebiger Abstützflächen.

Es ist zu erkennen und nachfolgend noch einmal festzuhalten, dass die erfindungsgemäße Einspannvorrichtung folgende große Vorteile besitzt:
- Vielseitige Verwendbarkeit z. B. in Laderäumen von Bussen, Lastkraftwagen, Großraumlimousinen, Kombifahrzeugen, Anhängern, Wechselbrücken, Containern, Kofferräumen von Personenkraftwagen (bei Limousinen Einspanneinrichtung meist horizontal), wobei die Vorrichtung auch zum Einsatz in Bootsinnenräumen, zum Sichern von Ladung, wie auch für die Zuladung von Booten auf Anhängern in Verbindung mit Gurtsystemen und zum Einsatz in Flugzeugen geeignet ist. Prinzipiell kann das System in allen geschlossenen Räumen ausreichender statischer Dimensionierung eingebracht werden.
- Die Vorrichtung kann zwischen Laderaumboden und Laderaumdecke oder zwischen den Seitenwänden verspannt werden. Es kann jedoch auch praktisch jedes formstabile Ladegut (Möbel, Boxen, Fenster usw.) zwischen Boden und Decke oder Seitenwand und Seitenwand durch positionssichernde flexible Matten (Pads o. ä.) mit hoher Gleitreibung mittels der erfindungsgemäßen Einspannvorrichtung eingespannt werden. Trennwände zur Laderaumteilung oder zur flächigen Sicherung von Ladung können durch Anlehnung oder Befestigung an der eingespannten Vorrichtung angebracht werden. Hierbei können die Ebenen, zwischen denen eingespannt wird, von einem parallelen Fortlauf abweichen. Das Einspannen kann von der Vertikalen oder Horizontalen, bedingt durch die spezielle Fuß- bzw. Kopfteilkonstruktion, winklig abweichen.
- Durch die besondere Ausbildung des unteren Stützgliedes (Bodenadapter) mit unterseitigem flexiblem Material höchster Gleitreibung (Zellkautschuk) und oberseitig verschiedenen Steckbohrungen und dessen entsprechende Dimensionierung findet eine optimale Ablastung des durch die Spreizvorrichtung erzeugten Druckes auf Boden oder Seitenwände oder formstabiles Ladegut, optimal statt, sowohl bei horizontaler, vertikaler als auch bei geneigter/schräger Verspann-Anbringung. Der Bodenadapter mit verschiedenen Bohrungen ermöglicht das Einspannen auch im Randbereich sowie schräg im Laderaum. Die Konstruktion kann an vielen Stellen im Laderaum ohne Vorbereitung eingebracht werden. Zudem bringt die Bodenadapter-Hilfsplatte mit ihren großen Abstütz-Abmessungen eine weitere Sicherheit auch bei nachgiebigerer Stützoberfläche des Lagegutes und geringeren Abmessungen des Bodenadapters.
- Die Sperrstange selbst ist einfach aufgebaut, mit einfachen, bekannten Spreiz- bzw. Spannvorrichtungen und ist zusammensetzbar aus mehreren axial zusammenzusteckenden Teilen. So kann sowohl eine relativ kurze, fast nur auf die Spreizeinrichtung reduzierte, als auch eine relativ lange Sperrstange, die z. B. die ganze Breite eines Fahrzeuges überspannt, in einfachster Weise bereitgestellt werden.
- Auch ist das obere Stützglied (Deckenadapter) mit einer ungewöhnlich dicken, flexiblen und gleichzeitig ausreichend festen "Polsterung" versehen und kann zudem eine konkave Stützfläche haben, zum optimalen formmäßigen Einbetten der Gegenkontur, z. B. eines Dachholmes oder Gitters. Die Stützfläche kann selbstverständlich auch eine konvexe, dachförmige oder konische Ausbildung aufweisen, wodurch sie dann zur Abstützung z. B. in einem Eck bestens geeignet ist. Die Kugelkopflagerung ermöglicht eine konstruktiv einfache Auslegung des Adapters insgesamt und dessen Anpassung an eine schräg verlaufende Gegenkontur. Der kugelabgestützte Deckenadapter ermöglicht in Verbindung mit dem stabilisierenden Bodenadapter in ausreichendem Spannungszustand die Aufnahme von schrägen Gegenkonturen. Zusätzlich wird über den an diesem vorgesehenen Zellkautschuk, in dessen konkavelastischer Oberfläche adaptiv die Gegenkontur optimal aufgenommen (Holm, Gitter, etc.).
- Insbesondere die Steifheit des Bodenadapters (und der Bodenadapter-Hilfsplatte), dessen ausreichende Dimensionierung im Hinblick auf die Länge der Distanzstücke der Sperrstange und der stabilen Verbindung, werden hohe Zug- und Drucklasten zuverlässig kompensiert (hohe Crashsicherheit).
- Das flexible Material mit höchster Gleitreibung (Zellkautschuk) verhindert bei ausreichender Dimensionierung von Fläche und Stärke, in Verbindung mit entsprechendem Anpressdruck, das Abgleiten der Konstruktion.

Selbstverständlich können noch weitere optimierende Vorkehrungen an der Vorrichtung getroffen werden, um Handhabung, Lebensdauer oder Einsatz zu verbessern. So kann ein Schlauch aus weichem Material über die Rohr-Distanzstücke er Sperrstange gezogen sein, zur Schonung des Einspanngutes. Auch können an die Rohr-Distanzstücke optimal verschiedenste Befestigungspunkte unterschiedlichster Art zur Aufnahme von Gurten und Halterungen befestigt werden. Auch das Gewinde-Spreizstück kann mit einer Schutzhülle gegen Verschmutzung versehen werden. Auch kann an der Oberseite des Bodenadapters, außerhalb der Bohrungen, eine Schutzauflage vorgesehen sein, z. B. ein Riffelgummi o. ä. zur dichten Aufnahme bei schonender und zusätzlich rutschgesicherter Lagerung von Einspanngut.

Schließlich ist von Vorteil, wenn die einzelnen Verbindungselemente wie Kugelkopf und Steckverbindungen, an sich bekannte form- oder kraftschlüssig wirksame Arretiereinrichtungen aufweisen, wie Indexierschrauben, Druckstifte oder -platten, Riefelungen oder Abflachungen. Dadurch wird erreicht, dass eine sichere, starre Verbindung hergestellt wird, so dass die einmal eingestellte Position der Stützstange nicht z. B. unter Last oder Schock verändert wird.

Nachfolgend wir die Erfindung anhand mehrerer Ausführungsbeispiele unter Bezug auf die Zeichnung näher erläutert. Es zeigen:
- Fig. 1:: eine schematische Darstellung eines axialen Schnittes durch die Einspannvorrichtung,
- Fig. 2:: eine Detaildarstellung in axialem Schnitt des oberen Stützgliedes in einen Deckenholm umgreifend abgestütztem Zustand,
- Fig. 3:: eine Perspektivansicht eines unteren Stützgliedes mit mehreren Steckbohrungen und zwei eingesteckten Sperrstangenenden,
- Fig. 4:: eine schematische Perspektivansicht einer Spannvorrichtung im verspannten Zustand zwischen Boden und Decke eines Transporters,
- Fig. 5:: eine schematische Perspektivansicht einer Vorrichtung mit kurzer Sperrstange in eingespanntem Zustand zwischen einer Kiste und einer Fahrzeugdecke,
- Fig. 6:: eine Ansicht wie in Fig. 5, mit zusätzlicher Hilfsplatte unter der unteren Stützplatte,
- Fig. 7:: eine Ansicht einer Mehrfach-Winkelanordnung dreier Sperrstangen mit einem gemeinsamen Bodenadapter,
- Fig. 8:: eine Schemaansicht der Anordnung eines Winkel-Steckadapters zwischen unterem Sperrstangenende und Bodenadapter, und
- Fig. 9:: eine Schemaansicht der Anordnung eines Schwenk-Winkeladapters zwischen unterem Sperrstangenende und Bodenadapter.

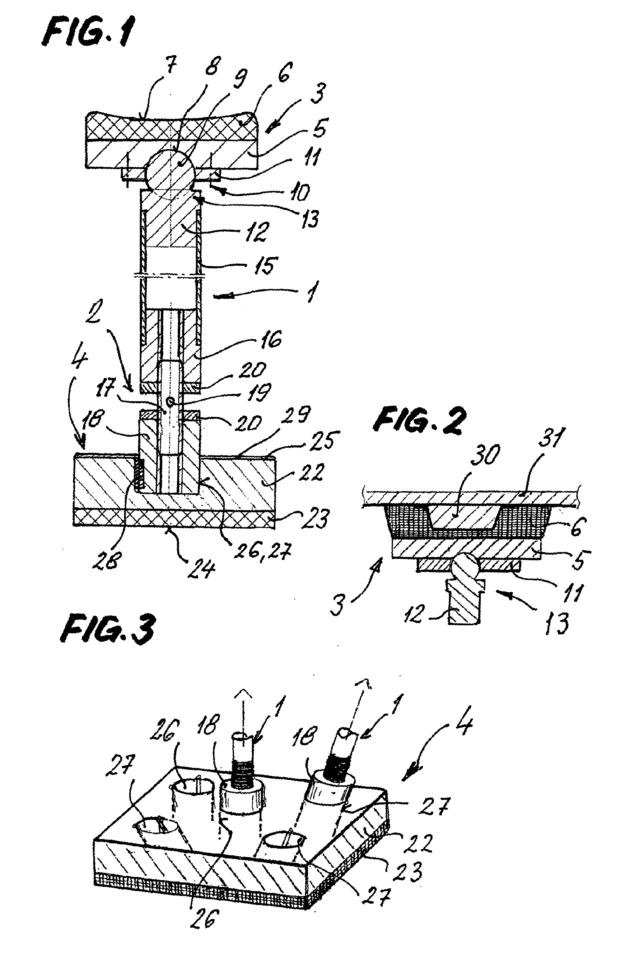

Wie aus Fig. 1 zu erkennen ist, besteht die erfindungsgemäße Einspannvorrichtung aus einer Sperrstange 1, die durch eine in unterschiedlichsten Ausführungen bekannte Trieb- und Spanneinrichtung 2 axial zumindest geringfügig verlängerbar und spannbar ist. An den beiden Stangenenden ist je ein Stützglied angebracht und zwar ein oberes Stützglied 3 (Deckenadapter) und ein unteres Stützglied 4 (Bodenadapter).

Das obere Stützglied 3 besteht aus einer verwindungssteifen runden oder rechteckigen Tragplatte 5, an deren Oberseite eine verhältnismäßig dicke Stützauflage 6 aus flexiblem Material höchster Gleitreibung wie Zellkautschuk, in bekannter Weise z. B. durch Kleben befestigt ist. Die Stirnfläche 7 der Auflage 6 ist zumindest geringfügig konkav ausgeformt, um ein formschlüssiges Umgreifen z. B. eines Dachholmes zu erleichtern. An der Innenstirnfläche der Tragplatte 5 ist mittig eine kalottenförmige Lagerpfanne 8 eingearbeitet, in welche die Lagerkugel 9 eines Kugelkopflagers 10, sich axial abstützend, hineinreicht. Um ein Auseinanderfallen des Kugelkopflagers 10 zu verhindern, ist in bekannter Weise eine zweigeteilte, den Kugelkopf hintergreifende Lagergegenscheibe 11 vorgesehen, die an der Tragplatte 5 in bekannter Weise z. B. über Schrauben lösbar befestigt ist. Koaxial am Kugelkopf 9 ist ein Steckzapfen 12 vorgesehen, einen Lagerkopf 13 bildend.

Die Sperrstange 1 besteht aus mindestens einem Rohr-Distanzstück 15, dessen Länge für den Bedarfsfall bzw. die verschiedenen Bedarfsfälle ausgelegt ist. An dem oberen Stirnende des Distanzstückes ist der Steckzapfen 12 des Lagerkopfes des oberen Stützgliedes 3 eingesteckt und unverschieblich festsetzbar. Es kann aber auch so vorgegangen werden, dass der Lagerkopf 13, bestehend aus Lagerkugel 9 und Steckzapfen 12 immer fest eingesetzt im Rohr-Distanzstück 15 vorgesehen ist und somit Teil der Sperrstange 1 ist und bei Bedarf eine Kopplung des Lagerkopfes 13 an dem dann nur noch aus Tragplatte 5 mit Stützauflage 6 und Lagergegenscheiben 11 bestehendem oberen Stützglied über die Lagergegenscheiben 11 vorzunehmen ist.

Am unteren Ende des Rohr-Distanzstückes 15 befindet sich in der dargestellten Ausführungsform, als Spanneinrichtung 2, eine Gewindebuchse 16 dreh- und verschiebefest eingesteckt, in der eine Gewindespindel 17 ein- und ausdrehbar hineinreicht. Diese Gewindespindel 17 reicht mit ihrem anderen Ende in eine Steck-Gewindebuchse 18 eingeschraubt hinein, wobei die Gewindespindel an ihren beiden in die entsprechenden Buchsen einschraubbaren Enden gegensinnige Gewinde aufweist. Beim Drehen der Gewindespindel in eine Richtung erfolgt ein Einschrauben oder Herausschrauben in bzw. aus beiden Gewindebuchsen gleichmäßig, wodurch die Gewindebuchsen entsprechend näher oder weiter voneinander gebracht werden und gespannt oder entspannt wird. Des weiteren ist in bekannter Weise an der Gewindespindel 17 eine radiale Betätigungsbohrung 19 vorgesehen oder ein radialer Schlitz oder zwei tangentiale Anflachungen zum Angriff mit einem Schraubschlüssel (nicht dargestellt). Zudem ist zum Absichern des ausgefahrenen Spannungszustandes an der Stirnseite der Gewindebuchsen 16 und 18 jeweils eine Kontermutter 20 vorgesehen.

Das untere Stützglied 4 (Bodenadapter) besteht aus einer relativ großen Steckplatte 22, an deren unteren Stützfläche eine Auflage 23 aus Zellkautschuk z. B. durch Kleben befestigt ist, die eine untere Stütz-Stirnfläche 24 mit hohem Gleitwiderstand besitzt. Die obere Stirnfläche 25 der Steckplatte 22 ist mit mindestens einer Sackloch-Steckbohrung 26, 27 versehen, in welche die Steckbuchse 18 der Sperrstange 1 eingesteckt ist. Über ein Nut-und-Feder-Element 28 ist diese Steckverbindung drehgesichert. An der oberen Stirnfläche 25 der Steckplatte 22 ist des weiteren eine Auflage 29 in Form einer weichen und/oder genoppten Gummiplatte durch Kleben o.ä. befestigt, zum Schutz von auf der Steckplatte 4 aufstehendem Ladegut.

Fig. 2 zeigt als Detailansicht das obere Stützglied 3 (Deckenadapter), in Ausführung als Steckmodul, mit an der Unterseite seiner Tragplatte 5 über die Lagergegenscheiben 11 befestigten Lagerkopf 13 mit Steckzapfen 12. Der Deckenadapter 3 ist in gespanntem Einsatz dargestellt, wobei er mit seiner elastischen Zellkautschuk-Stützauflage 6 einen Dachholm 30 eines Fahrzeugdaches 31 elastisch-formschlüssig umgreift.

Aus Fig. 3 ist ersichtlich, wie die Steckplatte 22 des unteren Stützgliedes 4 als Mehrfach-Steckplatte ausgebildet ist, wobei in deren Oberseite sowohl senkrechte Steckbohrungen 26 als auch winklig bzw. geneigt angeordnete Steckbohrungen 26, 27 eingebracht sind. Dabei ist ersichtlich, dass in in diesen Bohrungen 27 eingestecktem Zustand der Sperrstangen 1, über deren Steckbuchsen 18 jeweils eine senkrechte oder winklige Anordnung des unteren Stützgliedes 4 an der Sperrstange 1 bzw. eine entsprechende senkrechte oder winklige Abstützung möglich ist.

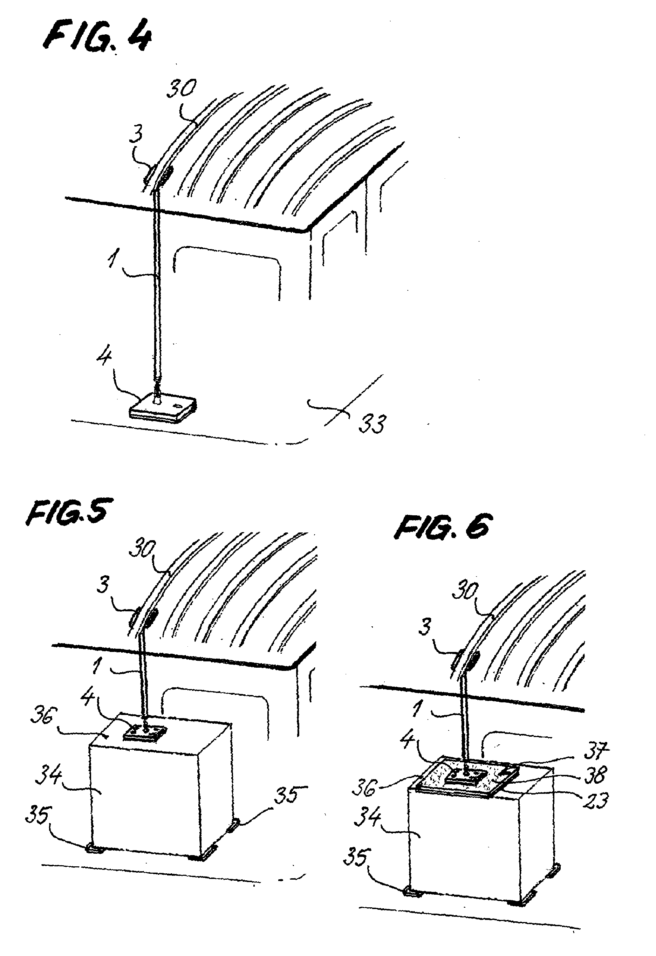

In Fig. 4 ist eine Einspannvorrichtung in "langer Ausführung" in gespanntem Zustand dargestellt. Dabei steht das untere Stützglied 4 in seiner ganzen, relativ großflächigen Ausdehnung satt auf dem Boden 33 des Fahrzeugs auf, während das obere Stützglied 3 sich an einem schrägen Abschnitt des Dachholmes 30 abstützt, dieses umgreift und eine entsprechende Schrägstellung einnimmt. Die zwischenbefindliche Sperrstange 1 ist in senkrechter Ausrichtung zwischen den beiden Stützgliedern 3, 4 angeordnet.

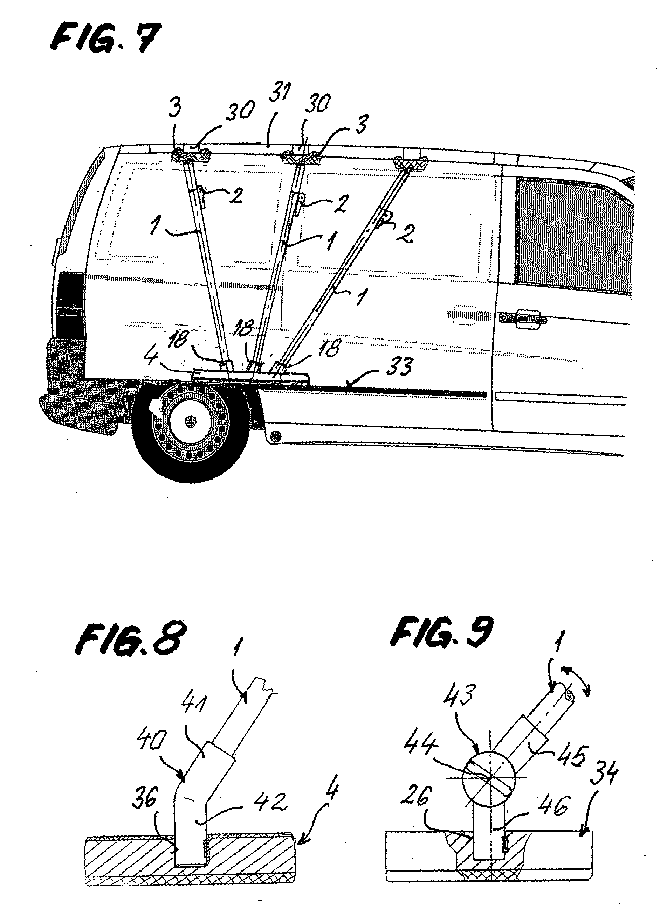

In Fig. 5 ist eine Einspannvorrichtung in "kurzer Ausführung" dargestellt, mit der eine Kiste 34 (oder Truhe oder Möbelstück) auf dem Fahrzeugboden 33 festgespannt ist. Dabei steht die Vorrichtung mit ihrem unteren Stützglied 4 großflächig auf der oberen Deckelfläche 36 der Kiste 34 auf, während das obere Stützglied, ähnlich wie bei der Ausführung nach Fig. 4 sich in Schrägstellung an einem Dachholm 30 abstützt, wobei die Sperrstange 1 ebenfalls senkrecht zwischengespannt ist. Zwischen Kiste 34 und Boden 33 ist eine Matte oder sind Mattenstücke 35 (Pads) aus rutschhemmendem Material wie Zellkautschuk, untergelegt.

Fig. 6 zeigt eine Ausführungsform wie in Fig. 5, nur dass sich hier unter dem unteren Stützglied 4 noch zusätzlich eine Hilfsplatte 37 zwischengelegt befindet, um die möglicherweise nicht ausreichend steife Deckplatte 36 der Kiste 34 zu entlasten bzw. eine sicherere Abstützung, ohne Einbruchgefahr durch ein Stützglied 4 mit kleiner Stützfläche, sicherzustellen. Diese Hilfsplatte 37 ist wesentlich größer ausgelegt als die Steckplatte des unteren Stützgliedes 4, entsprechend verwindungs- und biegesteif ausgelegt und weist an ihrer unteren Auflageseite ebenfalls eine rutschhemmende Stützauflage 23, z. B. aus Zellkautschuk, auf. Zudem besitzt sie an ihrer Oberseite 38 ebenfalls rutschhemmende Vorkehrungen, wie z. B. eine rutschhemmende Auflage aus Zellkautschuk oder eine Oberflächenprofilierung, z. B. in Form von Noppen, Riffelungen, Gitter, die mit der Stützauflage des unteren Stützgliedes 4 zusammenwirkt und diese abstützt..

Bei dem in Fig. 7 dargestellten Ausführungsbeispiel ist eine "lange Mehrfach-Ausführung" veranschaulicht. Diese besitzt nur ein großflächiges unteres Stützglied 4, bei dem drei Stützstangen 1 über deren Steckbuchsen 18 geneigt eingesteckt sind und zueinander unterschiedliche Winkel-Stellungen einnehmen. Die Sperrstangen 1 sind über deren Spanneinrichtungen 2 gespannt gehalten, so dass deren oberen Stützglieder 3 jeweils einen Dachholm 30 des Daches 31 des Fahrzeuges fest umgreifen. Die drei Stangen können in der gleichen Vertikalebene, z. B. Längsebene, angeordnet sein, wie dies aus Fig. 7 den Anschein erweckt. Sie können aber auch quer zur Längsebene zueinander einen Versatz in der Fahrzeugbreite aufweisen, je nach Einsatzfall. Es kann sich aber auch mindestens eine der Sperrstangen nicht an einem Dachholm, sondern an einer der Seitenwände des Fahrzeugs oder an einer Querstrebe abstützen. Dafür sind dann insbesondere die nachfolgend im Zusammenhang mit den Fig. 8 und 9 beschriebenen Winkel-Steckadapter 40 oder 43 optimal statt der Steckbuchsen 18 in das untere Stützglied 4 einsetzbar (nicht dargestellt).

Fig. 8 zeigt eine Ausführungsform, bei der in eine senkrechte Bohrung 26 des unteren Stützgliedes 4 eine Sperrstange 1 über einen an ihrem unteren Ende befestigten Winkel-Steckadapter 40 eingesteckt ist. Dieser besteht aus zwei winklig zueinander angeordneten Steckbuchsen 41 und 42 und ist als einstückige Winkelbuchse herstellbar, die entsprechend außen oder innen steck-ausgerüstet ist. Es können Adapter mit unterschiedlichen Winkelstellungen vorgesehen werden, so dass, je nach Bedarf, jeweils ein nur senkrechte Steckbohrungen 26 aufweisendes unteres Stützglied 4 mit unterschiedlich winkligen Steckadaptern 40 oder ein senkrechte Steckbohrungen 26 und geneigte Steckbohrungen 27 besitzendes unteres Stützglied 4 mit Steckadaptern 40 unterschiedlicher Winkelauslegung beliebig kombinierbar sind.

Fig. 8 zeigt schließlich ein Detail einer Ausführungsform, mit einem unteren Stützglied 4 ähnlich wie in Fig. 7, bei dem die Sperrstange 1 über einen an ihrem unteren Ende angebrachten Schwenk-Steckadapter 40 steckbefestigt ist. Der Schwenk-Steckadapter 40 weist einerseits eine Steckhülse 42 auf, zur Steckaufnahme der Stange 1 und andererseits einen Steckzapfen 34, zum Einführen in die Steckbohrung 26 des unteren Stützgliedes 4. Steckhülse 43 und Steckzapfen 43 sind miteinander winkeleinstellbar über ein an sich bekanntes Rastiergelenk 41 verbunden, das hier in seinem konkreten Aufbau nicht näher dargestellt ist. Dies kann z. B. aus zwei Zahnscheiben bestehen, deren Verzahnungen in fest verspanntem Zustand stirnseitig formschlüssig ineinander greifen, wobei jeweils eine der Zahnplatten mit dem Steckzapfen 43 und die andere mit der Steckhülse 42 fest verbunden ist. Wird das Rastiergelenk 41 z. B. durch Lösen einer quergeführten Schraube gelockert, können die beiden Zahnplatten zueinander verschwenkt und in entsprechend der Zahnteilung vorgegebenen Winkeln wieder festgelegt werden.

### Bezugszeichenliste

- 1.: Sperrstange
- 2.: Trieb- und Spanneinrichtung
- 3.: oberes Stützglied (Deckenadapter)
- 4.: unteres Stützglied (Bodenadapter)
- 5.: Tragplatten
- 6.: Stützauflage
- 7.: Stirnfläche
- 8.: Lagerpfanne
- 9.: Lagerkugel (Kugelkopf)
- 10.: Kugelkopflager
- 11.: Lagergegenscheibe
- 12.: Steckzapfen
- 13.: Lagerkopf
- 14.: ----
- 15.: Rohr-Distanzstück
- 16.: Gewindebuchse
- 17.: Gewindespindel
- 18.: Steck-Gewindebuchse
- 19.: Betätigungsbohrung
- 20.: Kontermutter
- 21.: ---
- 22.: Steckplatte
- 23.: Stützauflage
- 24.: untere Stützfläche
- 25.: obere Stützfläche
- 26.: Steckbohrung, senkrecht
- 27.: Steckbohrung, geneigt
- 28.: Nut- und Feder-Element
- 29.: Auflage
- 30.: Dachholm
- 31.: Dach
- 32.: ----
- 33.: Boden
- 34.: Kiste
- 35.: Unerlage, Matte
- 36.: Deckelfläche
- 37.: Hilfsplatte
- 38.: Oberseite
- 39.: ----
- 40.: Winkel-Steckadapter
- 41.: Steckbuchse
- 42.: Steckbuchse
- 43.: Schwenkwinkel-Steckadapter
- 44.: Rastiergelenk
- 45.: Steckhülse, -zapfen
- 46.: Steckzapfen

## Patentansprüche

1. Einspannvorrichtung zur Sicherung von Ladegut auf der Ladefläche eines Fahrzeugs, mit
- einer Sperrstange (1), gebildet aus mindestens zwei koaxialen Stangenteilen, die axial auseinander schiebbar sind,
- einer Trieb- und Spanneinrichtung zwischen den Stangenteilen,
- je einem mit einer rutsch hemmenden Auflage (6) versehenen Stützglied (3, 4) an den beiden Stangenenden,
- wobei eines der Stützglieder (3) allseitig kippbeweglich ist und dessen äußere Stütz-Stirnfläche den Spannstangendurchmesser radial wesentlich überragt, **dadurch gekennzeichnet,**
**dass** beide Stützglieder (3, 4) eine den Spannstangendurchmesser radial wesentlich überragende äußere Stütz-Stirnfläche (7, 24) mit mindestens dreifach größeren Abmessungen besitzen, und dass das zweite Stützglied (4) ein loses Steckteil ist, an dessen innerer/oberer Stirnfläche (25) mindestens eine Sackloch-Steckbohrung (26, 27) vorgesehen ist, zur wahlweisen abstützenden und führenden Aufnahme des unteren Endes mindestens einer Sperrstange (1).

2. Vorrichtung nach Anspruch 1, **dadurch gekennzeichnet,**
**dass** das obere Stützglied (3) mindestens den dreifachen und das untere Stützglied (4) mindestens den vierfachen Durchmesser oder Längs- und/oder Breitenerstreckung aufweist als der Sperrstangen-Rohrdurchmesser.

3. Vorrichtung nach Anspruch 1, **dadurch gekennzeichnet,**
**dass** an der nach innen weisenden Stirnfläche (25) des unteren Stützgliedes (4) mindestens eine Bohrung (26) die senkrecht und/oder mindestens eine Bohrung (27), die geneigt zur äußeren Stirnfläche (24) angeordnet ist, vorgesehen sind, wobei mindestens zwei symmetrisch oder asymmetrisch in gleicher oder unterschiedlichen Ebenen auseinander- oder zueinanderweisend geneigte Bohrungen (27) vorgesehen, dass die Höhe der Steckbohrungen (26, 27) mindestens gleich, vorzugsweise mindestens 1,5 mal deren Durchmesser beträgt und dass miteinander zusammenwirkende Verdrehsicherungen an Steckbohrungen und Stangenende vorgesehen sind, wie Nut und Feder (28).

4. Vorrichtung nach Anspruch 1, **dadurch gekennzeichnet,**
**dass** die gesamte äußere Stirnfläche des unteren Stützgliedes (4) mit einer mindestens ca. 5 cm, vorzugsweise mindestens 10 cm dicken, flexiblen Materialschicht (23) höchster Gleitreibung versehen ist, wie z. B. Zellkautschuk.

5. Vorrichtung nach Anspruch 1, **dadurch gekennzeichnet,**
**dass** beim Verspannen mit Hilfe der Einspannvorrichtung von z. B. Möbeln oder Kisten (34), unter diese mindestens eine rutschhemmende Matte oder Mattenstücke (35) aus rutschhemmendem Material, z. B. aus Zellkautschuk, untergelegt sind.

6. Vorrichtung nach Anspruch 1 oder 8, **dadurch gekennzeichnet,**
**dass** eine im Einsatz der Vorrichtung zwischen dem unterem Stützglied und einer Aufstützfläche (33 oder 36) eine Bodenadapter-Hilfsplatte (37) aus rutschhemmendem Material eingelegt ist, die mindestens doppelt so groß ausgelegt ist wie die Steckplatte (22) des unteren Stützgliedes (4) und Abmessungen von ca. 20 cm bis min. ca. 50 cm und mehr aufweist und dass die Hilfsplatte (37) an ihrer unteren Abstützfläche eine hoch rutschhemmende Stützauflage (23) aus z. B. Zellkautschuk besitzt und an ihrer Oberseite eine hoch rutschhemmende Ausrüstung wie z. B. eine rutschhemmende Auflage aus Zellkautschuk o. ä., Noppen, Riffelungen oder ein Gitter aufweist oder min. eine ein- und umsteckbare Steckleiste und/oder Steckbolzen vorgesehen sind, die in Stecklöcher in der Oberseite (38) der Hilfsplatte (37) eingreifen.

7. Vorrichtung nach Anspruch 1, **dadurch gekennzeichnet,**
**dass** das obere Stützglied (3) als rutschhemmende Stützauflage (6) eine mindestens 5 mm, vorzugsweise 10 bis 40 mm von der Tragplatte abragende, dicke, flexible Schicht höchster Gleitreibung und Form-Anpassbarkeit besitzt, z. B. aus Zellkautschuk.

8. Vorrichtung nach Anspruch 7, **dadurch gekennzeichnet,**
**dass** die Oberseite/Stirnfläche (7) der Stützauflage (6) zumindest geringfügig konkav ausgeformt ist.

9. Vorrichtung nach Anspruch 1, **dadurch gekennzeichnet,**
**dass** zur allseitigen Kippbeweglichkeit des oberen Stützgliedes (3) eine Kugelkopflagerung (10) vorgesehen ist, und dass am oberen Stangenende der Kugelkopf (9) und an der Unterseite der Tragplatte (5) des oberen Stützgliedes (3) die Kugelkopf-Lagerpfanne (8) vorgesehen sind, wobei eine den Kugelkopf gegenhaltende Lagergegenscheibe (11) an der Tragplatte (5) befestigt ist.

10. Vorrichtung nach Anspruch 1, **dadurch gekennzeichnet,**
**dass** als Spreizvorrichtung (2) zum Längeneinstellen und Spannen eine Doppel-Gewindespindel (17) vorgesehen ist.

11. Vorrichtung nach mindestens einem der vorhergehenden Ansprüche,
**dadurch gekennzeichnet, dass** sie modulartig aus axial zusammensteckbaren Teilen oder Baugruppen zusammengesetzt ist, wobei vorgesehen sind:
- mindestens ein Sperrstangenteil (1) mit einer Spreizvorrichtung (2), welches mindestens ein, vorzugsweise mehrere, gegeneinander austauschbare Rohr- Distanztücke (15) gleicher und/oder unterschiedlicher Länge besitzt,
- ein als Steckmodul ausgebildetes oberes Stützglied (3), welches in oder auf das obere Stabende fest auf- oder einsteckbar ist,
- und ein als Mehrfach-Steckplatte ausgebildetes unteres Stützglied (4), in welches das untere Ende des Sperrstabes (1) kipp- und drehfest einsteckbar ist.

12. Vorrichtung nach Anspruch 10, **dadurch gekennzeichnet, dass** das als Steckmodul ausgebildete obere Stützglied (3) an der Lagerkugel (9) einen Steckzapfen (12) besitzt, einen Lagerkopf bildend, der im oberen Stabende bedarfsweise einsetzbar und festsetzbar ist.

13. Vorrichtung nach Anspruch 1, **dadurch gekennzeichnet,**
**dass** zwischen unterem Ende der Sperrstange (1) und unterem Stützglied (4) ein Winkel-Steckadapter (38) in Form einer winklig geformten Doppelsteckbuchse vorgesehen ist, oder dass zwischen unterem Ende der Sperrstange (1) und unterem Stützglied (4) ein Schwenkwinkel-Steckadapter (40) befestigbar ist, mit einem Schwenkgelenk (41) zwischen auseinanderweisenden Steckhülsen bzw. Steckzapfen (42, 43), welches z. B. ein Rastiergelenk ist.

14. Vorrichtung nach mindestens einem der vorhergehenden Ansprüche, **dadurch gekennzeichnet, dass** den einzelnen Verbindungselementen, wie Kugelkopflagerung (10) und Steckverbindungsteilen (12, 38, 40) an sich bekannte form- oder kraftschlüssig wirkende Arretiereinrichtungen zugeordnet sind, wie z. B. Indexierschrauben oder - stifte, Druckplatten oder -stifte, Riefelungen, Abflachungen.
